(19) Europäisches Patentamt
European Patent Office
Office européen des brevets

(11) **EP 2 160 032 A2**

(12) **EUROPEAN PATENT APPLICATION**

(43) Date of publication:
**03.03.2010 Bulletin 2010/09**

(51) Int Cl.:
**H04N 7/173** *(2006.01)*

(21) Application number: **09161863.7**

(22) Date of filing: **03.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **28.08.2008 JP 2008220557**

(71) Applicant: **Kabushiki Kaisha Toshiba**
**Minato-ku**
**Tokyo 105-8001 (JP)**

(72) Inventors:
• **Uehara, Tatsuya**
**Minato-ku Tokyo 105-8001 (JP)**
• **Yoshihara, Hiroto**
**Minato-ku Tokyo 105-8001 (JP)**

• **Yamane, Nobuhiro**
**Minato-ku Tokyo 105-8001 (JP)**
• **Yamauchi, Yasunobu**
**Minato-ku Tokyo 105-8001 (JP)**
• **Mihara, Isao**
**Minato-ku Tokyo 105-8001 (JP)**
• **Sekine, Masahiro**
**Minato-ku Tokyo 105-8001 (JP)**
• **Higuchi, Yasukazu**
**Minato-ku Tokyo 105-8001 (JP)**

(74) Representative: **Henkel, Feiler & Hänzel**
**Patentanwälte**
**Maximiliansplatz 21**
**80333 München (DE)**

(54) **Content display apparatus and content display method**

(57) According to one embodiment, a content display apparatus includes: a first storage module (151) configured to store a content provider providing a content and a category information representing a category grouping the content provider in association with each other; an acquiring module (103, 109; 103, 1701; 109, 1501, 1511) configured to acquire, for each content to be displayed, category information associated in the first storage module with content provider of the each content (151), the acquiring module acquiring the category information associated with the content provider of the each content in association with content information of the each content; a second storage module (154) configured to store in association with each other the category information and a display mode differentiating display of the content information for each category information; and a display module (106, 170) configured to display the content information with the display mode.

EP 2 160 032 A2

**Description**

BACKGROUND

1. Field

One embodiment of the invention relates to a content display apparatus that displays content information of a plurality of providers, and a content display method.

2. Description of the Related Art

In recent years, with increased capability of AV equipment for storing contents and improved seamless accessibility of contents between equipment, let alone within the same equipment, or on a network, there has been a proliferation in the number of contents accessible to users. Accordingly, for example, Japanese Patent Application Publication (KOKAI) No. 2001-292383 discloses a conventional receiving device that allows users to select and view such contents.

With the conventional receiving device, in response to user selection of content from a list of contents, the content desired by the user is displayed. When the content selected by the user is stored in the device, the content is read and displayed on its data display module. On the other hand, when the content is present outside the device, the content is received from the outside and displayed on the data display module.

In audio-video equipments and the like, due to an increase in storage capacity of a storage media such as a HDD (hard disk drive), a user is usually required to perform number of processing to retrieve contents desired to be viewed. Further, when contents such as video and audio data provided through a network are to be included in display targets to be displayed, the number of contents required to be searched increases. Accordingly, when a list of all content information of the contents provided by different providers is displayed, it would be difficult for the user to specify content information of a desired content.

It is therefore an object of the invention to provide a content display apparatus and a content display method that can easily specify content demanded by a user from a large number of contents.

SUMMARY OF THE INVENTION

To achieve the object mentioned above, according to an aspect of the invention, a content display apparatus includes: a first storage module configured to store a content provider and a category information in association with each other, the content provider providing a content, the category information representing a category grouping the content provider; an acquiring module configured to acquire, for each content to be displayed, category information associated with content provider of the each content in the first storage module, the acquiring module acquiring the category information associated with the content provider of the each content in association with content information of the each content; a second storage module configured to store the category information and a display mode in association with each other, the display mode differentiating display of the content information for each category information; and a display module configured to display the content information with the display mode.

According to another aspect of the invention, a content display method implemented by a content display apparatus including a first storage module and a second storage module, the first storage module being configured to store a content provider and category information in association with each other, the content provider providing a content, the category information representing a category grouping the content provider, the second storage module being configured to store the category information and a display mode in association with each other, the display mode differentiating display of content information for each category information, the content display method including: acquiring, by an acquiring module, for each content to be displayed, category information associated with content provider of the each content in the first storage module, the acquiring acquiring the category information associated with the content provider of the each content in association with content information of the each content; a displaying, by a display module, the content information with the display mode.

According to an aspect of the invention, a display mode of content information is changed for each category grouping a content provider. Accordingly, content can easily be distinguished from other contents even if the number of content is large, and a user can easily specify a desired content.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a display processing apparatus according to a first embodiment of the invention;

FIG. 2 is an exemplary schematic diagram of metadata when a TV program is content in the first embodiment;

FIG. 3A is an exemplary schematic diagram of display information representing the details of the content in the first embodiment;

FIG. 3B is another exemplary schematic diagram of display information representing the details of the content in the first embodiment;

FIG. 4 is an exemplary status transition table in the embodiment;

FIG. 5 is an exemplary status resistor table in the embodiment;

FIG. 6 is an exemplary first association table in the embodiment;

FIG. 7 is an exemplary metadata acquiring table in the embodiment;

FIG. 8 is an exemplary second association table in the embodiment;

FIG. 9 is an exemplary schematic diagram of a screen of a list of content information, the display of the screen being controlled by a display controller in the embodiment;

FIG. 10 is an exemplary schematic diagram for explaining operation of displaying display information in the embodiment;

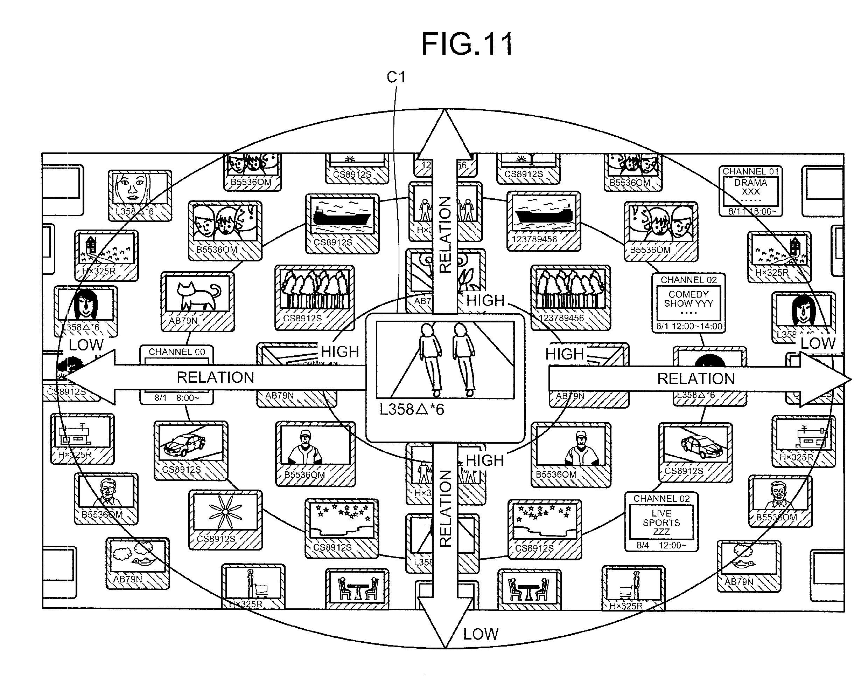

FIG. 11 is another exemplary schematic diagram for explaining the operation of displaying the display information in the embodiment;

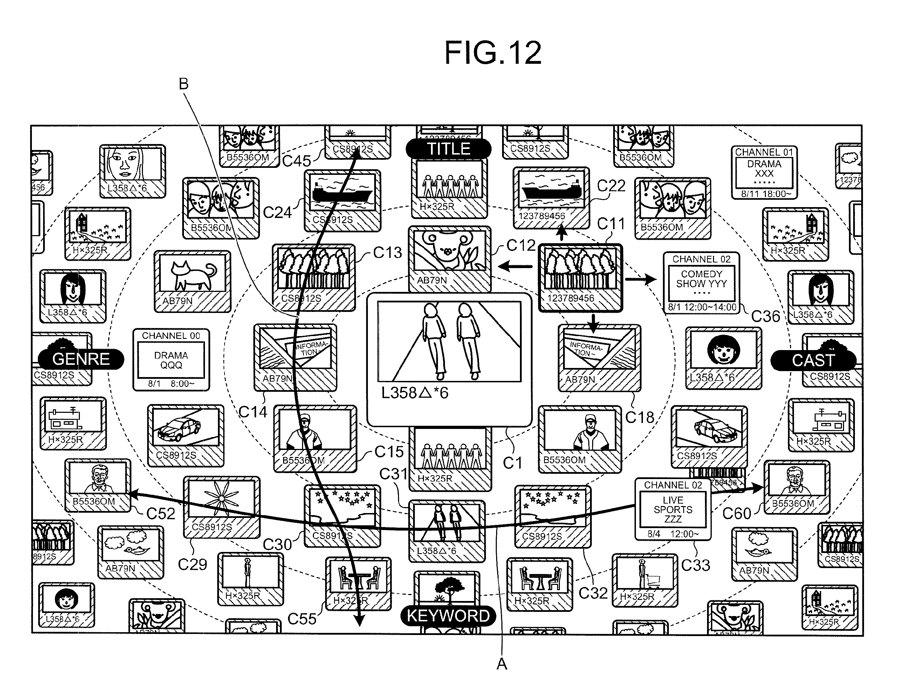

FIG. 12 is an exemplary schematic diagram of list information including display information of key content and display information of other contents in the embodiment;

FIG. 13 is an exemplary flowchart of display processing of the display information by the display processing apparatus in the embodiment;

FIG. 14 is an exemplary flowchart of display processing of the display information by a display processing apparatus according to a second embodiment;

FIG. 15 is an exemplary block diagram of a display processing apparatus according to a third embodiment;

FIG. 16 is an exemplary third association table in the third embodiment;

FIG. 17 is an exemplary flowchart of display processing of display information by the display processing apparatus according to the third embodiment;

FIG. 18 is an exemplary block diagram of a display processing apparatus according to a modification;

FIG. 19 is an exemplary flowchart of display processing of display information of the display processing apparatus in the modification; and

FIG. 20 is an exemplary block diagram of a hardware configuration of the display processing apparatus in the embodiment.

DETAILED DESCRIPTION

Although, a display processing apparatus of the embodiments is described below as being applied to a television (TV), this is by way of example only and is not to be construed to be limiting. The display processing apparatus may be applied to any display device capable of displaying video or the like.

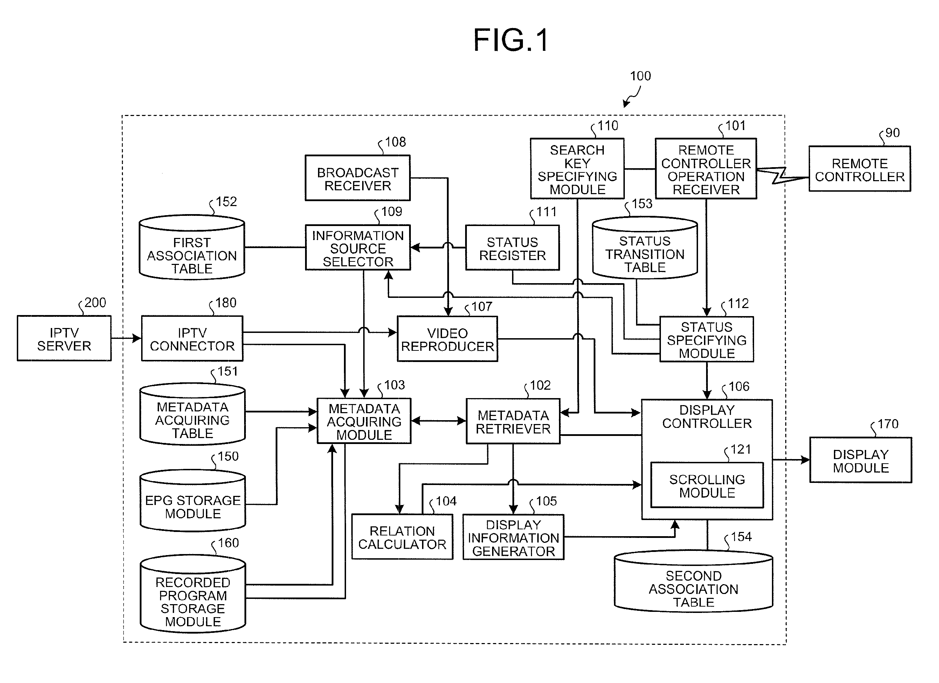

The configuration of functions of a display processing apparatus 100 will be explained. FIG. 1 is an exemplary block diagram of the display processing apparatus 100 according to a first embodiment. As shown in FIG. 1, the display processing apparatus 100 includes an EPG (electronic program guide) storage module 150, a metadata acquiring table 151, a first association table 152, a status transition table 153, a second association table 154, a recorded program storage module 160, a display module 170, a broadcast receiver 108, a video reproducer 107, and an IPTV (Internet protocol television) connector 180. The IPTV connector 180 is connected to an IPTV server 200 through a network.

The display processing apparatus 100 includes processors such as an application specific integrated circuit (ASIC) and a central processing unit (CPU), a memory module such as a read-only memory (ROM) storing a predetermined program that controls operation of the display processing apparatus 100, and a random access memory (RAM) corresponding to a work area for the processing apparatus. Configurations of the hardware will be described later. They realize each functional module of a remote controller operation receiver 101, a metadata retriever 102, a metadata acquiring module 103, a relation calculator 104, a display information generator 105, a display controller 106, an information source selector 109, a search key specifying module 110, a status register 111, and a status specifying module 112.

The IPTV server 200 provides services to distribute video such as TV programs and movies using IP. In response to a request from the display processing apparatus 100, the IPTV server 200 delivers thereto content such as the video and metadata of the content.

The IPTV connector 180 is an interface that connects the display processing apparatus 100 and the IPTV server 200.

The EPG storage module 150 is a storage medium such as HDD or memory for storing an electronic program guide obtained from an external server that manages and distributes the electronic program guide. More specifically, the EPG storage module 150 obtains via a communication module (not illustrated) an electronic program guide for TV, CATV, CS broadcasting, BS broadcasting, and the like from a service provider server connected through a network such as the Internet, and stores the electronic program guide. It is assumed herein that the electronic program guide contains information on programs to be broadcasted within a period from the present time to a certain time in the future (e.g., after one week).

The recorded program storage module 160 is a storage medium such as HDD or memory for storing content such as video. For example, if the display processing apparatus 100 is TV with HDD, the recorded program storage module 160 stores video of a recorded TV program as the content. Examples of the content include video in a digital versatile disk (DVD) and video captured by a video camera.

The recorded program storage module 160 also stores metadata related to the content in association therewith. The term "metadata" as used herein refers to a set of information indicating unique characteristics of the content. The unique characteristics include the title of the content and the broadcast date and time of the content. For example, if the content is a TV program, the metadata indicates information (program information) on the TV program such as the title, the channel/broadcast date and time, the cast, the brief description (subtitle), and the genre. This metadata is provided to the recorded program storage module 160 with the content and stored therein in association with the content.

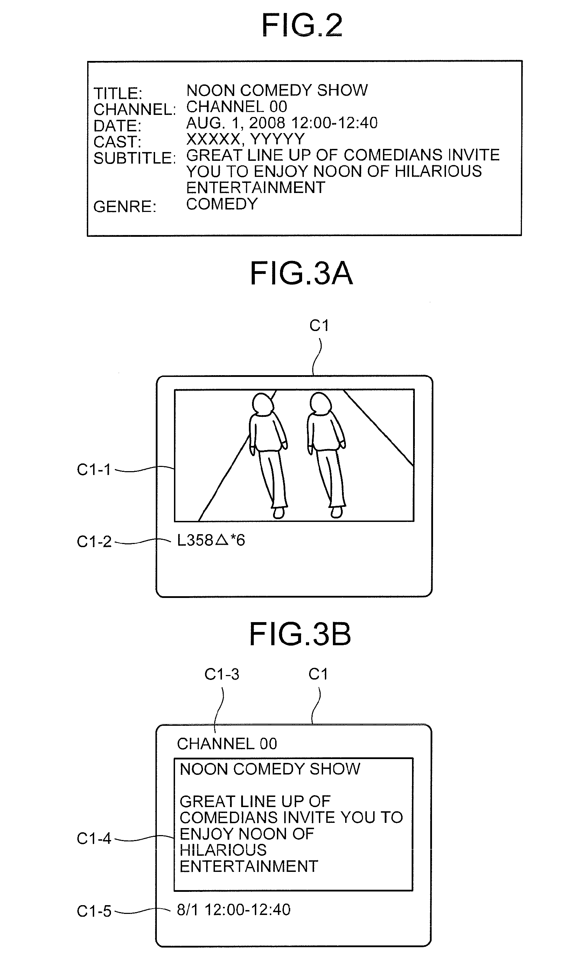

FIG. 2 illustrates the metadata when a TV program is the content. The metadata illustrated in FIG. 2 represents information related to the content of a recorded TV program. The information, such as the title of the TV program "Noon Comedy Show", the channel "00", the broadcast date and time "August 1, 2008, 12:00 - 12:40", the cast "xxxxx, yyyyy", the subtitle "Great line up of comedians invite you to enjoy a noon of hilarious entertainment", and the genre "comedy", is stored as metadata.

Although an example is described above in which the metadata is provided as being preset, this is by way of example and not of limitation. The recorded program storage module 160 may receive information provided by a user thorough an input device such as a remote controller 90 and store it as metadata in association with the content.

The display module 170 includes, for example, a liquid crystal display (LCD) for displaying text and an image, and displays content of a received TV program, stored content, an electronic program guide, and the like.

The display module 170 also displays display information representing the details of the content generated by the display information generator 105, which will be described later, to allow a user to retrieve content (see FIGS. 3A and 3B).

The broadcast receiver 108 receives the content of video (TV program) broadcasted by TV broadcasting through an antenna or a cable (not illustrated).

The video reproducer 107 acquires the content of video that a user desires to reproduce. Examples of the content include the content of a TV program, etc., received by the broadcast receiver 108, the content of video acquired from the IPTV server 200 through the IPTV connector 180, and the content of video stored in the recorded program storage module 160. The video reproducer 107 decodes (reproduces) the content thus acquired, and outputs it to the display controller 106.

The remote controller operation receiver 101 receives user's operation. More specifically, when a user presses an operation button on the remote controller 90, the remote controller operation receiver 101 recognizes the event. For example, when a user demands to retrieve other contents related to desired content from a plurality of contents, the user operates an operation button of the remote controller 90 to select the desired content (key content) as a search key from a plurality of contents of the electronic program guide displayed on the display module 170. Accordingly, the remote controller operation receiver 101 receives this selection operation, i.e., an instruction to retrieve contents.

The key content may be the content that is currently being reproduced. In this case, the user presses an operation button on the remote controller 90 while the content is currently being reproduced. Thus, the remote controller operation receiver 101 receives this selection operation to select the content currently being reproduced as the key content, i.e., an instruction to retrieve contents.

The remote controller operation receiver 101 also receives a selection operation to select display information of content of current interest from list information. Here, the list information indicates display information of a plurality of contents and displayed on the display module 170. The details will be described later.

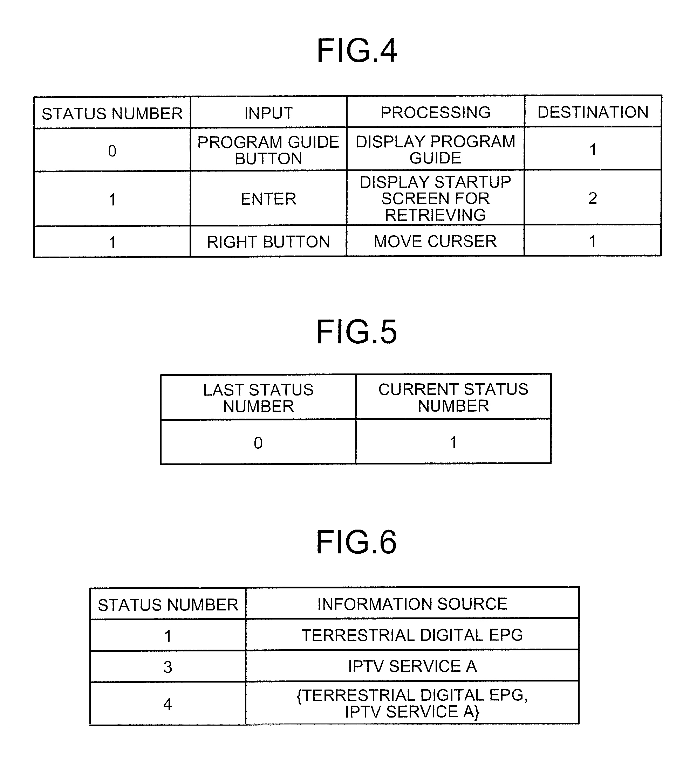

As shown in FIG. 4, the status transition table 153 stores "input", "processing", and "destination" indicated by the status number, for each "status number". In the status transition table 153, "input", "processing", and "destination" are associated with each other. The "input" represents an input operation performed by the remote controller operation receiver 101. The "processing" represents processing executed by the display processing apparatus 100 when the input operation under "input" is performed. The "destination" represents a status number set when the input operation under "input" is performed. The status number corresponds to each screen displayed by the display controller 115.

For example, when a "program guide button" is pressed while displaying a screen corresponding to a status number "0", the display controller 115 performs processing so as to "display program guide" of which is associated with "program guide button" in the status transition table 153. Then, the status number "1" under "destination" associated with the "program guide button" is set for the "current status number" in the status register 111 which will be explained later.

As shown in FIG. 5, the status register 111 stores the last status number and the current status number in association with each other. The "last status number" is a status number corresponding to a screen which is displayed prior to the current screen. "Current status number" is a status number corresponding to the current screen.

The status specifying module 112 sets, based on an input operation received by the remote controller operation receiver 101, the status number under "destination" of the status transition table 153 to the status number under "current status number" of the status register 111, and also sets the status number under "last status number" to the status number previously set under the "current status number". Further, the status specifying module 112 outputs, based on the input operation received by the remote controller operation receiver 101, "processing" for displaying a screen specified by the status transition table 153 to the display controller 115.

For example, when the "program guide button" is pressed while a screen corresponding to the status number "0" is displayed, the status specifying module 112 searches through the status transition table 153 for an item with the "status number" being "0" and the "input" being "program guide button". Then, the status specifying module 112 instructs the display controller 106 to execute the details under "processing", i.e., "display program guide". Then, the status number "1" of the "destination" is set to that of the current state. Accordingly, the status specifying module 112 sets the status register 111 so as to set the last status number to "0" and the current status number to "1".

As shown in FIG. 6, the first association table 152 stores information source a metadata of which is to be acquired by the metadata acquiring module 103, in association with the status number. That is to say, the first association table 152 stores the information source to be searched for each display screen (status number).

The information source selector 109 refers to the first association table 152, and selects an information source corresponding to the metadata to be acquired. In this embodiment, the information source selector 109 refers to the status register 111. When the status number under "last status number" of the status register 111 exist in the first association table 152, the information source associated with that status number is selected so that the metadata thereof is to be acquired. When status number under "last status number" of the status register 111 does not exist in the first association table 152, metadata of all information sources are to be acquired. In this embodiment, metadata of all information sources are to be acquired. On the contrary, in a second embodiment, number of information sources providing metadata to be acquired is narrowed down using the first association table 152.

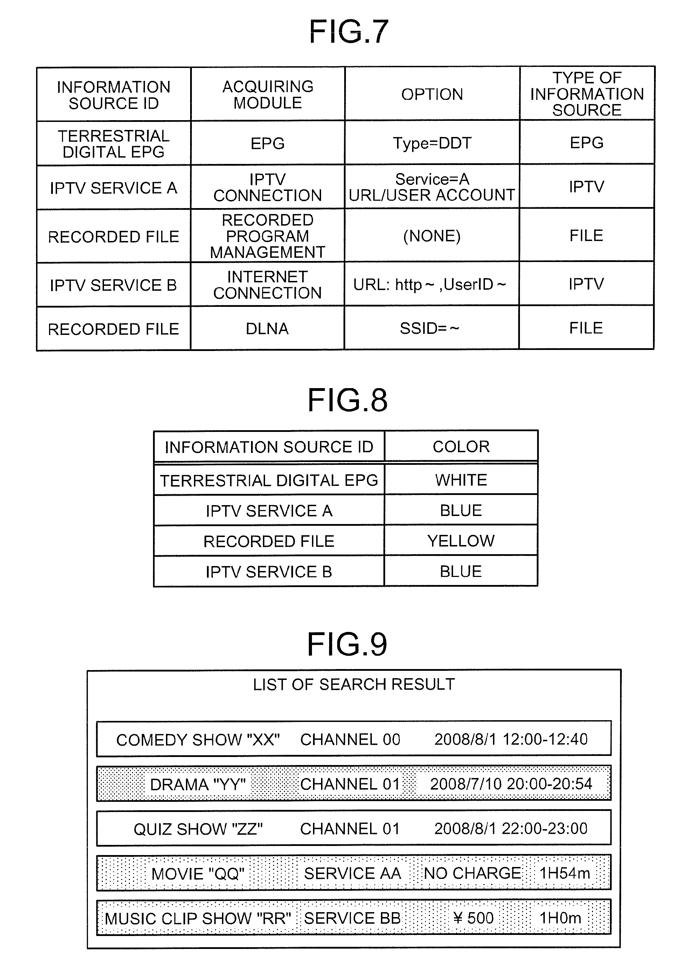

The metadata acquiring table 151 stores information necessary for the metadata acquiring module 103, which will be described later, to acquire the metadata. As shown in FIG. 7, the metadata acquiring table 151 stores an information source ID, an acquiring module, an option, and a type of information source, in association with each other. The information source ID identifies information source corresponding to a content provider. The acquiring module is used to acquire the contents. The option is, for example, a configuration necessary for acquiring the contents by the acquiring module. The type of information source is a category grouping the information source.

In the Internet, motion pictures are provided by various services. For example, motion pictures are supplied by companies (information source), or produced and uploaded by a user (information source) so as to make the motion pictures viewable by others. When contents of these services (information sources) in the Internet are to be provided at one time so as to display the contents with display mode differ for each information source, it is difficult for the user to recognize the contents since there exists an excessively large number of different display modes.

Hence, in this embodiment, the services provided through the Internet are grouped by a type of the information source "IPTV". Specifically, information sources are grouped into three types, i.e., EPG, FILE and IPTV, and a different display mode is adopted for each type of information source, whereby the user can easily recognize the contents.

Upon receipt of the search operation corresponding to a search key through the remote controller operation receiver 101, the metadata acquiring module 103 acquires metadata of contents based on the acquiring method stored in the metadata acquiring table 151 for each information source (a content provider). Here, the information source corresponding to the metadata to be acquired is the information source selected by the information source selector 109.

For example, when the contents of terrestrial digital EPG is to be acquired, the metadata acquiring module 103 loads the EPG module (not shown) registered in the metadata acquiring table 151. Then, the EPG module acquires metadata of each content from the recorded program storage module 160, and sends the acquired metadata to the metadata acquiring module 103. Accordingly, the metadata acquiring module 103 can acquire metadata of the contents registered in the EPG.

When the contents is to be acquired through an IPTV service A, the metadata acquiring module 103 loads the IPTV connection module (not shown) registered in the metadata acquiring table 151. Then, the IPTV connection module asks the IPTV server 200 for metadata of the contents so as to acquire the metadata, and sends the acquired metadata to the metadata acquiring module 103. Accordingly, the metadata acquiring module 103 can acquire the metadata of the contents registered in the IPTV service A. The same may be adopted for the metadata provided by other providers.

In the embodiment, two types of search methods, i.e., a keyword search and a relation search, can be realized.

The keyword search searches contents based on a keyword input by the user. In the relation search, contents related to a key content are positioned based on the relation. First, configurations necessary for the keyword search are explained.

Upon receipt of an input operation corresponding to a character string (a keyword) to be a search query through the remote controller operation receiver 101, the search key specifying module 110 specifies the character string as a keyword in the metadata retriever 102 which will be described later. This is input by the remote controller operation receiver 101. For example, a software keyboard may input the keyword into the remote controller operation receiver 101.

Then, the metadata retriever 102 detects metadata including the keyword specified by the search key specifying module 110, or in other words, detects metadata satisfying the search query, from the metadata acquired by the metadata acquiring module 103. The metadata retriever 102 outputs the detected metadata to the display controller 106. Accordingly, the display controller 115 can display a list of the content information satisfying the search query based on the keyword.

Next, the relation search is explained. The metadata retriever 102 retrieves, when the remote controller operation receiver 101 receives the selection operation of the key content, metadata of the key content from the metadata of the contents acquired by the metadata acquiring module 103. The metadata retriever 102 then outputs the metadata of the key content to the relation calculator 104. The metadata retriever 102 also retrieves, based on the metadata of the key content acquired from the metadata acquiring module 103, metadata of other contents so as to calculate relation between the metadata of other contents and the metadata of the key content by the relation calculator 104. The metadata retriever 102 then outputs the metadata of the other contents to the relation calculator 104.

The metadata retriever 102 also outputs, when the remote controller operation receiver 101 receives selection operation of the key content, metadata of all contents acquired by the metadata acquiring module 103 to the display information generator 105.

The relation calculator 104 calculates the relation between the key content and the contents other than the key content based on the metadata of the key content and the metadata of the other contents received from the metadata retriever 102 for each item contained in the metadata. Examples of the item include title and channel. More specifically, the relation calculator 104 calculates relation RM using the following equation:

$$\mathrm{relation\ RM} = \sum_{n-1}^{N} \mathrm{fa}_n(\mathrm{M11(n)}, \mathrm{M21(n)}) \times \mathrm{wa}_n \qquad (1)$$

where N represents the total number of metadata items acquirable by the metadata acquiring module 103, M11 represents the metadata of the key content, M21 represents the metadata of the other contents, and (n) represents n-th metadata acquired by the metadata acquiring module 103. Further, $\mathrm{fa}_n(\mathrm{M11(n)}, \mathrm{M21(n)})$ is a function that returns the relation between metadata M11(n) and M21 (n) as $\mathrm{RM}_n$, and $\mathrm{Wa}_n$ is a value (n = 1, ..., N) indicating weight.

As described above, although various types of information is acquired as the metadata, the metadata will be described below as including five items (N = 5), i.e., recoding date and time, title of content, channel, genre, and cast, for simplicity. The five items of the metadata will be described as n = 1, 2, ..., 5 in the above order.

The relation RM of the other contents with respect to the key content can be represented by the weighted linear sum of the following five relations $\mathrm{RM}_1$ to $\mathrm{RM}_5$:

$\mathrm{RM}_1 = \mathrm{fa}_1$(recoding date and time of metadata M11, recoding date and time of metadata M21)
$\mathrm{RM}_2 = \mathrm{fa}_2$(title of metadata M11, title of metadata M21)
$\mathrm{RM}_3 = \mathrm{fa}_3$(channel of metadata M11, channel of metadata M21)
$\mathrm{RM}_4 = \mathrm{fa}_4$(genre of metadata M11, genre of metadata M21)
$\mathrm{RM}_5 = \mathrm{fa}_5$(cast of metadata M11, cast of metadata M21)

For example, $\mathrm{fa}_1$ is a function that is larger for more recent recoding date and time and is smaller for less recent recoding date and time. More specifically, $\mathrm{fa}_1$ may be represented by using a relational expression as follows:

$$\mathrm{MO1}/|\mathrm{rec\_data\ (M11)} - \mathrm{rec\_data\ (M21)}|$$

where rec_data (x) is a function that uniquely converts recoding date and time of x into an integer, MO1 is an arbitrary constant number, and |X| is a function indicating the size of X and is typically an absolute value. Specifically, rec_data (x) is a function that converts the recoding date and time into an integer such as seconds having elapsed from a reference date and time determined as 0.

While an example is described above in which a function g represented as g(x) = MO1/|X| is applied to $\mathrm{fa}_1$

(M11, M21) = g(rec_data (M11) - rec_data (M21)), it is not so limited. The function g may be a function with L2 norm as, for example, $g(x) = MO1/||x||$. In this case, $||x||$ is the square root of the sum of squares of the difference between elements that constitute x.

Other functions such as a sigmoid function and a gamma function may be applied to $g(x)$. Besides, while an example is described above in which the function is larger as the recoding date and time of the metadata M11 and M21 is more recent, it is not so limited. The function may be smaller as the recoding date and time of the metadata is more recent. Further, the function g may be large when a specific condition is satisfied.

For example, $fa_2$ is a function that is larger as more of the same letters or characters are contained in the character strings of the titles of the respective metadata M11 and M21. More specifically, if the title of the metadata M11 is "ABCDE" and that of the metadata M11 is "FGCDH", two letters "CD" are contained in both the titles. If the title of the metadata M11 is "ABCDE" and that of the metadata M11 is "FGHIE", one letter is contained in both the titles. Therefore, the value of $fa_2$ is larger in the former case. The relation may be determined based on a keyword contained in the brief description (subtitle) of a program in the same manner as the title basis.

While an example is cited above in which the number of the same letters or characters contained in both the titles are simply compared, this is not intended as a limitation. Additional conditions may be used such as that the function is larger as more of the same letters or characters are contained in both the titles from the top, or that even if no same letter is present in both the titles, when the titles have a common idea, they are determined to be the same. As an example of the latter case, a Japanese word "yakyu" is regarded as the same as "baseball", and the titles that contain the words "yakyu" and "baseball", respectively, are determined to contain the same character string.

Besides, when the titles have the same main character string and different sub character strings, they are likely to be of contents of the same series. Accordingly, in such a case, the value of $fa_2$ may be set to large. Specifically, for example, "ABCDE#2" and "ABCDE#3" are likely to be the titles of different episodes of the same drama series. Therefore, in such a case, the value of $fa_2$ may be doubled. Note that the above is described by way of example only, and the comparison as described above may be accomplished with high accuracy by commonly known technologies such as approximate pattern matching and regular expression matching.

For example, $fa_3$ is a function that is large when the metadata M11 and M21 are of contents of the same channel. Simply, $fa_3$ may be a function that takes value MO2 when the metadata M11 and M21 are of contents of the same channel and otherwise takes value 0. The value MO2 is an arbitrary constant number. In addition, if the metadata M11 and M21 are of contents of affiliate channels, the value of $fa_3$ may be set to a different value. For example, $fa_3$ may be a function that returns value MO2/2 when the metadata M11 and M21 are of contents of affiliate channels. Further, $fa_3$ may be a function that returns value MO2/4 if the metadata M11 and M21 are of contents of affiliate channels but of different broadcast media. Note that the above is described by way of example only, and $fa_3$ may be an arbitrary function.

For example, $fa_4$ is a function that is large when the metadata M11 and M21 are of contents of the same genre. More specifically, $fa_4$ may be a function that takes value MO3 if the metadata M11 and M21 both belong to the same genre "sports" and otherwise takes value 0. In addition, if the metadata M21 belongs to the subgenre of the metadata M11 such as, for example, if the metadata M11 belongs to the genre "sports" and the metadata M21 belongs to the genre "baseball", $fa_4$ may be a function that takes value MO3/2. Further, even if the metadata M11 and M21 do not directly belong to the same genre, when they can be categorized in the same genre such as, for example, when the metadata M11 belongs to the genre "baseball" while the metadata M21 belongs to the genre "football" and the both are categorized in sports, $fa_4$ may be a function that takes value MO3/4. Note that the above is described by way of example only, and $fa_4$ may be an arbitrary function.

For example, $fa_5$ is a similar function to $fa_4$. More specifically, if the metadata M11 is of the content featuring "WW, XX, YY" and the metadata M21 is of the content featuring "XX, YY, ZZ", then the same two persons are casted for both the contents. In such a case, $fa_5$ may be a function that takes value $2 \times MO4$ (MO4: an arbitrary constant number), and it may be a function that takes value 0 if there is no same person casted for both the contents. Besides, someone in the cast may be a member of a group. For example, if a person KK is a member of a group XX, and when the metadata M11 is of the content featuring "VV, WW, XX" and the metadata M21 is of the content featuring "KK, YY, ZZ", the person KK is casted in the content of M11 as a member of the group XX and also is casted in the content of M21. In such a case, $fa_5$ may be a function that returns value MO4/2.

In a similar fashion, the relation between groups or between people featured in the contents may be defined. For example, when the groups XX and YY belong to the same office, $fa_5$ may be a function that returns value MO4/4. In this case, the relation between groups or between people may be defined in the metadata or may be obtained from an external server (information site).

While an example is described above in which the relation is calculated not taking into account a person in the cast list, this is not so limited. The relation may further be weighted according to the order on the cast list. For example, the derived relation is left as it is with respect to the first person on the cast list for the metadata M11, while it is weighted by 1/2 with respect to the second person and similarly is weighted by 1/3 with respect to the third person. The order on the cast list for the metadata M21 may also be taken into account in addition to that for the metadata M11. For example, in comparison of the second person on the cast list for the metadata M11 with the third person on the cast list for the metadata M21, the relation may be weighted by 1/2 with respect to the second person for the metadata M11 and may further be weighted by 1/3 with respect to the third person for the metadata M21. That is, the relation may be weighted by 1/2x1/3 = 1/6. Besides, the relation may be weighted differently with respect to a star playing a leading role based on information on the cast or the like. For example, the derived relation may be double-weighted with respect to the star.

The display information generator 105 generates display information representing details of the key content and the other contents based on the metadata of the key content and that of the other contents output from the metadata retriever 102. More specifically, for example, based on the metadata of content of video data stored in the recorded program storage module 160, the display information generator 105 adds such items as a title to the representative image of the video data to generate display information to be displayed on the display module 170. Further, for example, based on the metadata of content of video data obtained from the IPTV server 200, the display information generator 105 adds such items as a title to the representative image of the video data to generate display information to be displayed on the display module 170. Still further, for example, based on the electronic program guide stored in the EPG storage module 150, the display information generator 105 generates display information to be displayed on the display module 170 to indicate the title of a TV program, the broadcast date and time, the channel, the brief description of the TV program, and the like.

The display information is now described in detail. FIGS. 3A and 3B illustrate examples of the display information representing the details of content. FIG. 3A illustrates display information C1 of the key content generated based on, for example, the metadata of video data stored in the recorded program storage module 160. As illustrated in FIG. 3A, the display information C1 includes a representative image C1-1 of the content and title "L358Δ*6" C1-2 of the content (video). On the other hand, FIG. 3B illustrates the display information C1 of the key content generated based on, for example, the electronic program guide. As illustrated in FIG. 3B, the display information C1 includes the channel C1-3, title "Noon Comedy Show" with subtitle "Great line up of comedians invite you to enjoy a noon of hilarious entertainment" C1-4 of the content (video), and broadcast date and time C1-5.

As shown in FIG. 8, the second association table 154 stores "color" displayed for each "type of information source" grouping the information source. In this embodiment, the color to be displayed varies. Alternatively, a display mode other than the color may be varied for each type of information source.

The display controller 106 reproduces and displays contents sent by the video reproducer 107 on the display module 170.

The display controller 106 displays, for example, a list of content information on the display module 170 as a search result screen using the search key. As shown in FIG. 9, in displaying content list, the content information of the information sources corresponding to content providers are displayed in different colors for each type of information source grouping the information source. In the example shown in FIG. 9, the frame interior of the content information acquired from EPG is displayed in white, the frame interior of the content information provided from the network such as IPTV or the Internet is displayed in blue (illustrated as light shading in FIG. 3), and the frame interior of the content information of a recorded content (file) is displayed in yellow (illustrated as deep shading in FIG. 3).

Further, when the remote controller operation receiver 101 receives from the user the operation for retrieving a content related to a particular content as mentioned above, the display controller 106 displays the list information including the display information of the key content and the display information of other contents related to the key content so that the user can search through the list information.

In the list information (related content list), the display information of the key content is arranged in a desired position. With the position of the display information of the key content as the center, pieces of the display information of the other contents are arranged to form concentric polygons, for example, correspondingly to the directions of an operation button such as an arrow key on the remote controller 90. When generated, the list information is displayed on the display module 170. The screen is divided into predetermined areas for respective items in radial directions from the center. The pieces of the display information of the other contents are arranged in the predetermined areas such that the one with higher relation is closer to the center. Additionally, in the list information, the display information of the key content is displayed in the largest size, and the display information of the other contents is displayed smaller as the distance from the center increases. A description will be given of the operation of displaying the display information.

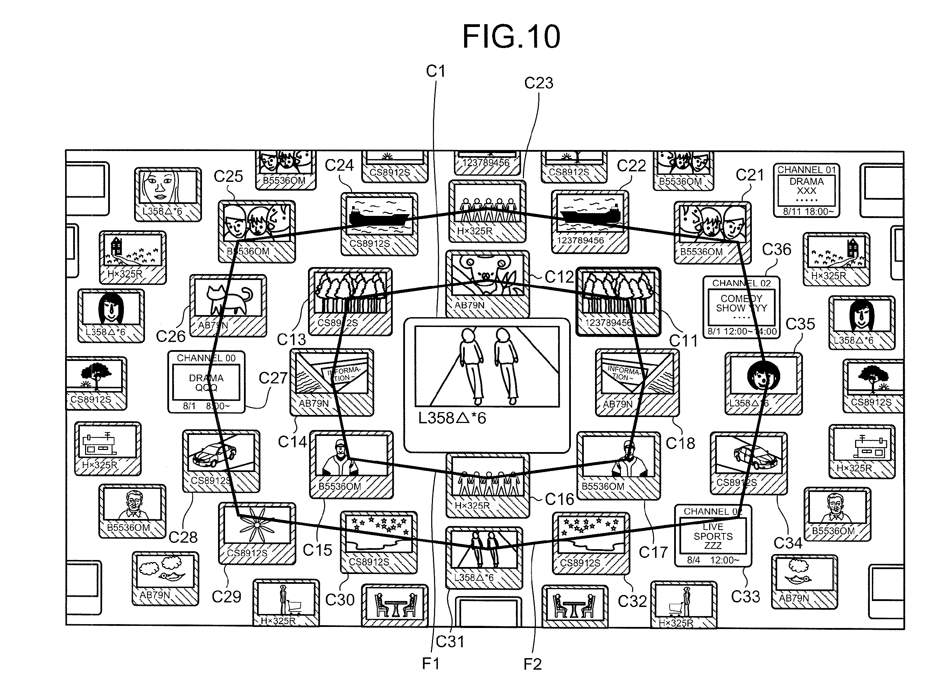

In particular, as illustrated in FIG. 10, the display controller 106 arranges pieces of display information of other contents on a plurality of octagons F1, F2, ..., which are concentrically formed around the display information C1 of the key content as the center, correspondingly to up, down, left, and right directions of the operation button on the remote controller 90. More specifically, the display controller 106 arranges eight pieces of display information C11 to C18 of other contents on the octagon F1. Further, the display controller 106 arranges on the octagon F2 eight pieces of display information C21, C23, C25, C27, C29, C31, C33, and C35 of other contents, and also eight pieces of display information C22, C24, C26, C28, C30, C32, C34, and C36 of other contents between the respective pieces along the directions of the operation button. In the same manner as just described, the display controller 106 arranges on each octagon eight pieces of display information of other contents, and also eight pieces of display information of other contents between the respective pieces. With this arrangement of display information of other contents, with respect to any piece of display information, other pieces of display information are arranged along the up, down, left, and right directions of the operation button.

When the display controller 106 displays the display information, the color of an outer frame of the display information varies for each type of information source. As in FIG. 9, the color of the outer frame of the display information varies for each type of information source. For example, C36 corresponding to the EPG information is displayed in white, C34 corresponding to a content from IPTV is displayed in blue (illustrated as light shading in FIG. 3), and C17 corresponding to a recorded (file) content is displayed in yellow (illustrated in deep shading in FIG. 3).

Further, the display controller 106 divides the display area into areas with predetermined size, and displays the display information of each relevant genre on each divided display area. In this embodiment, each display area is divided into four portions, i.e., upper, lower, left, and right portions. The item "title" is displayed on the upper side, the item "cast" is displayed on the right side, the item "keyword" is displayed on the lower side, and the item "genre" is displayed on the left side. The display information C1 of the key content is positioned at the center, and pieces of the display information of other contents are positioned near the center outwards.

As described above, according to the first embodiment, pieces of display information of other contents are positioned along up, down, left, and right directions of an operation button. Therefore, upon receipt of an instruction for left-right movement through the operation button, the focus in retrieval on the display information C30 moves in directions indicated by a double-head arrow A. Similarly, upon receipt of an instruction for up-down movement through the operation button, the focus in retrieval on the display information C30 moves in directions indicated by a double-head arrow B. Additionally, for example, if the cursor moves one space to the right in response to an instruction when the focus is on the display information C11, the focus moves to the display information C36. Similarly, if the cursor moves one space in the up, left, or down direction in response to an instruction, the focus moves from the display information C11 to the display information C22, C12, or C18. Thus, the operation using the operation button such as an arrow key on the remote controller 90 can be facilitated.

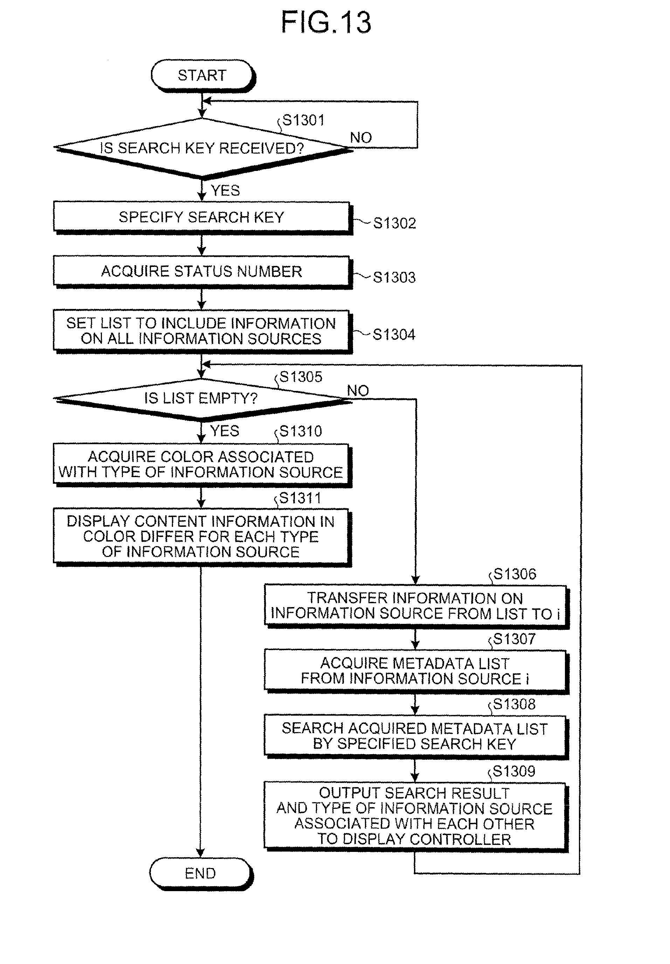

Next, the display processing of the display information performed by the display processing apparatus 100 configured as mentioned above is explained. FIG. 13 is an exemplary flowchart of the display processing of the display information by the display processing apparatus 100.

The remote controller operation receiver 101 waits to receive the search operation corresponding to the search key through the operation button of the remote controller 90 (S1301). Upon receipt of the selection operation (Yes at S1301), the search key specifying module 110 specifies a keyword input by a user as a search keyword (S1302). Specifically, the search key specifying module 110 acquires the keyword input by the user, and the keyword is substituted for a variable "keyword".

Next, the information source selector 109 acquires from the status register 111 a status number corresponding to the last screen displayed before the search screen (S1303). In the embodiment, the acquired status number is assumed not to be included in FIG. 6. Hence, the information source selector 109 sets the variable "List" storing destination for acquiring the metadata so as to include information on all information sources (S1304). Accordingly, information on all information sources is to be selected as the destination for acquiring the metadata. In this embodiment, {terrestrial digital EPG, IPTV service A, IPTV service B, recording file} are stored in the variable "List". Further, in this embodiment, character strings are used as the stored information source ID. Alternatively, numerals that identify the information source may be stored.

Next, the metadata acquiring module 103 determines whether the variable "List" is empty (S1305). When the metadata acquiring module 103 determines that the variable "List" is not empty (No at S1305), the information on the information source under the variable "List" is retrieved, and is transferred to information i on the information source as the destination for acquiring the metadata (S1306). Then, the information on the information source retrieved from the variable "List" is removed therefrom. For example, assuming that the variable "List" includes {terrestrial digital EPG, IPTV service A, IPTV service B, recording file}, the "List" ends up including {IPTV service A, IPTV service B, recording file} when terrestrial digital EPG is transferred to the information i. Furthermore, assuming that the variable "List" includes {recording film}, the variable "List" becomes empty when the recording film is transferred to the information i.

Thereafter, the metadata acquiring module 103 acquires a metadata acquiring method and information on a type of information source corresponding to the information i on the information source from the metadata acquiring table. Then, the metadata acquiring module 103 acquires a list of metadata of contents of the information source by the metadata acquiring method (S1307).

As described above, the metadata acquiring method refers to the metadata acquiring table to search for an item including "information source ID" corresponding to the information i on the information source, and executes "module" in the item with "option". The module acquires metadata based on configuration specified by the option. The metadata may have a format so as to include five fields of "title", "channel", "broadcast date and time", "cast", and "details of program" for one program as in a format shown in FIG. 2.

In this embodiment, the metadata acquiring module 103 acquires all metadata of acquirable contents. Alternatively, the number of metadata to be acquired can be limited. Different format of metadata may be considered for respective information source. In this embodiment, the metadata acquiring module 103 brings different metadata for respective information sources to an identical format.

The metadata retriever 102 searches a list of metadata of contents of the acquired information i on the information source using the keyword stored in the variable "keyword" (S1308), whereby only the metadata of contents satisfying the search query using the search key are extracted. The metadata retriever 102 may search the whole metadata, or alternatively may search only a specific field of metadata (for example, "casts"). As a result of the search, the metadata on the appropriate program are obtained.

Next, the metadata retriever 102 associates the metadata satisfying the search query with the type of information source, and outputs it to the display controller 106 (S1309). The display controller 115 successively stores input data until the execution of the processing of S1310. For example, the fields of "type of information source" and the "information source ID" are added to the metadata form shown in FIG. 2, and are stored for each of the metadata.

On the other hand, in S1305, when the metadata acquiring module 103 determines that the list is empty (Yes at S1305), the display controller 115 acquires colors associated with the type of information sources input together with the input metadata from the second association table 154 (S1310).

The display controller 115 displays the list information of metadata of the contents in different colors for respective information sources (S1311). Consequently, in the display of search results, the list information shown in FIG. 9 in which the color varies for each type of information source can be displayed. In the display of the search results, the display mode may be varied for each type of information source. For example, in the example shown in FIG. 9, the type of the information source is expressed by colors. Alternatively, the type of the information source may be expressed by icons or characters.

The display controller 115 may change the details of display for each type of information source. Further, in displaying the list information of the metadata, sorting under specific conditions (for example, sorting according to the user's taste) may be performed by the display controller 115 before the display.

The keyword search is explained above. Other search methods may be used. In this case, a search based on other search methods rather than the keyword search is performed in S1308. For example, in the relation search, the relation (distance) to the key content may be calculated for each content. In this case, in the display controller 115, a search result screen, on which pieces of display information of respective contents are positioned based on the calculated relation, is displayed. For example, as shown in FIG. 10, a piece of display information of a key content is displayed at the center, and pieces of other display information are displayed around the center in the order the relation descends.

In this case, as with the display of the list information, the display is varied according to the type of the information source. In this embodiment, the type of the information source is expressed in colors as in FIG. 10. Alternatively, the type may be expressed by the shape of the frame or may be expressed by character information.

Referring back to FIG. 1, the display controller 106 comprises a scrolling module 121. When the remote controller operation receiver 101 receives an instruction specifying display information of content of current interest (focused content) in response to the depression of an operation button on the remote controller 90, the scrolling module 121 scrolls the list information in the operation direction in a predetermined display range. At this time, regardless of the movement amount of the list information due to scrolling by the scrolling module 121, the display controller 106 maintains display information of key content to be displayed in the display range. Besides, the display controller 106 displays the display information of the focused content specified from other contents than the key content by the operation with the operation button in such a manner that the display information of the focused content is larger than that of the other contents not specified.

In the display processing apparatus 100 according to this embodiment, contents are provided with the color of the content information varies for each type of information source grouping content providers (information sources). Consequently, contents can be recognized for each group even when the number of information sources providing contents is large. Accordingly, the user can easily specify a desired content, and the user can easily select and view the desired content.

In the first embodiment, the information source selector 109 selects all pieces of information on information sources as to be searched. In the second embodiment, the information source selector 109 narrows down number of pieces of information on information sources to be searched according to the status information. The display processing apparatus according to the second embodiment has the same configurations as that of the display processing apparatus 100 according to the first embodiment. Accordingly, explanations for configurations of the display processing apparatus according to the second embodiment are omitted.

In this embodiment, regarding narrowing down the number of pieces of the information source to be searched, when for example a user displays a search screen after referring to a list screen of contents of predetermined information sources, this is construed as a request to search a predetermined information source to which the displayed content belongs. For example, when a search screen is currently called up from the electronic program guide, it is likely to be preferred to search the contents which are currently displayed on the electronic program guide.

Therefore, in the display processing apparatus 100 according to this embodiment, the information source to be searched is specified based on a status number indicating the last screen displayed before the search screen.

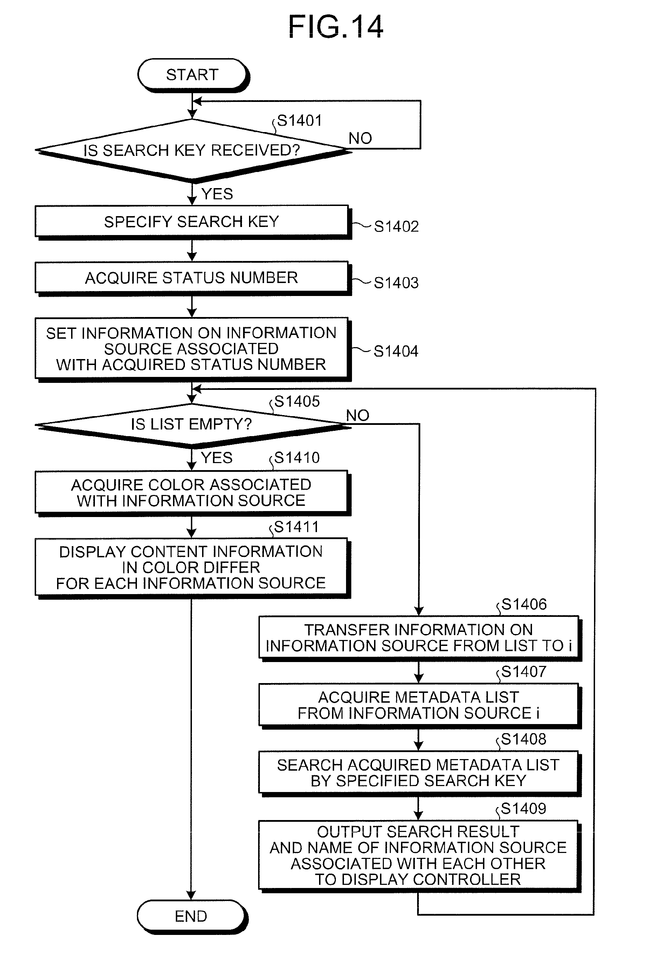

Next, display processing of display information by the display processing apparatus 100 having the above configuration is explained. FIG. 14 is a flow chart of display processing of the display information by the display processing apparatus 100 according to the second embodiment.

As in FIG. 13 of the first embodiment, processing of S1301 to S1303 is performed to acquire the status number (S1401 to S1403). When the status number corresponding to the last screen displayed before the search screen cannot be acquired, the current status number may be utilized.

Thereafter, the information source selector 109 sets the "List" storing the destination for acquiring the metadata so as to include an information source ID associated with the status number in the first association table 152 (S1404). Thus, the information source that provides contents relevant to the last screen displayed before the search screen is selected as the destination for acquiring the metadata. According to this embodiment, for example, when the status number indicating the last screen displayed before the search screen is the status number "1" representing the program guide, {terrestrial digital EPG} is stored in the variable "List".

The processing after this is the same as that of the first embodiment (S1305 to S1311 in FIG. 13), and the explanation thereof is omitted (S1405 to S1411).

In the display processing apparatus 100 according to this embodiment, in addition to the effect of the first embodiment, a desired content can easily and advantageously be specified by properly limiting the information source to be searched of the content to reduce the display of unnecessary contents. Thus, since the number of contents to be displayed can be properly decreased, the time necessary until arrival at the necessary content by scroll or the like can be shortened.

When the user displays predetermined content information, in some cases it is good enough to only display the content corresponding to displayed content information, but in some other cases contents of other information sources cannot be displayed together due to details of contracts with the content providers of the other information sources. For example, regarding the relation search explained in the first embodiment, the search is performed using the key content corresponding to the search query. As a result of this search, all the contents provided by other information sources are displayed, thereby result in increased number of contents which match the search query. This is sometimes disadvantageous to users. For example, when a user makes contract with a information source by paying a fee, upon searching the contents provided by the contracted information source, the contents provided by other non-contracted information sources requiring fee payment might be detected, and the user might need to pay fees for viewing the contents. This is possibly disadvantageous to the user. Further, also in the information source that provides the key content, the user may possibly go to other information source that provides similar contents.

Thus, depending upon the key content corresponding to the search query, the information source to be searched should sometimes be limited. Accordingly, in the display controller according to this embodiment, the number of the information source to be the search target is limited according to the information source of the key content.

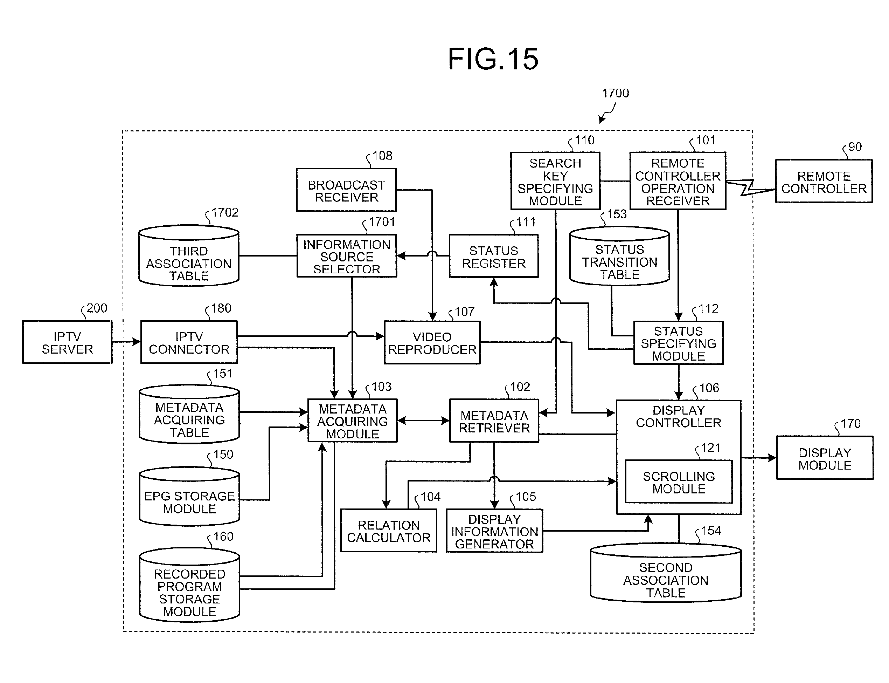

The display processing apparatus 1500 shown in FIG. 15 is different from the display processing apparatus 100 according to the first and second embodiments only in that the first association table 152 is deleted, the third association table 1702 is added, and an information source selector 1701, which is different in processing from the information source selector 109, is provided. In the configuration of the display processing apparatus 1500 according to this embodiment, explanations of configurations common to the display processing apparatus 1500 according to the first embodiment are omitted.

In the relation search explained in the first embodiment, the search is performed using preliminarily displayed content corresponding to the search key. Accordingly, the metadata retriever 102 stores an information source ID, utilized in the search, as one field of the metadata. Thus, the information source selector 1701 can easily obtain information on an information source to which the search key belongs.

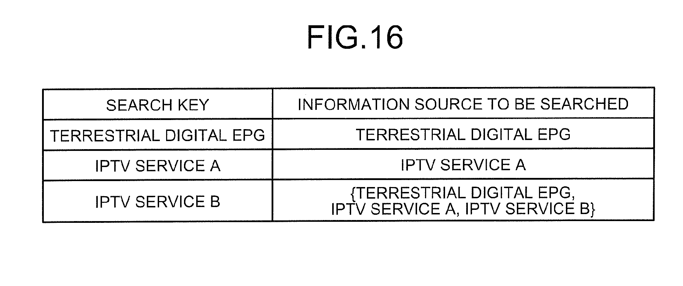

As shown in FIG. 16, the third association table 1702 stores a "search key" (an information source that provides a key content to be a search target) associated with an information source ID representing a "search object information source". Thus, an information source ID of the information source to be the search key can be specified from the key content. According to this embodiment, in the third association table 1702, the information source ID of the information source to be the search target is set. Alternatively, an information source ID of an information source, which is not the search target, may be set. In this case, in the information source selector 1701, the search target is one obtained by deleting an information ID set in the field of "information source ID" from all the predetermined information sources. The reason why the information source ID, which is outside the search target, is stored, is that, for a predetermined information source, when a restriction such as a simultaneous display prohibition is expressed, the amount of description in "information source ID" as the target outside the search target can be reduced. This facilitates the maintenance and management of the table.

The information source selector 1701 acquires an information source ID representing the key content selected by the remote controller operation receiver 101 from the metadata retriever 102, and acquires an information source ID representing the search key from the third association table 1702. The information source selector 1701 selects the acquired information source ID as the information source to be searched.

When a search screen is searched using the content selected on other screen as the search key, as with the first and second embodiments, the information source can be specified from the status number by referring to a previously provided first association table 152. Alternatively, in transition from a screen other than the search screen, the searching according to this embodiment may be performed when searching explained in the first and second embodiments is performed to select a key content within a search screen.

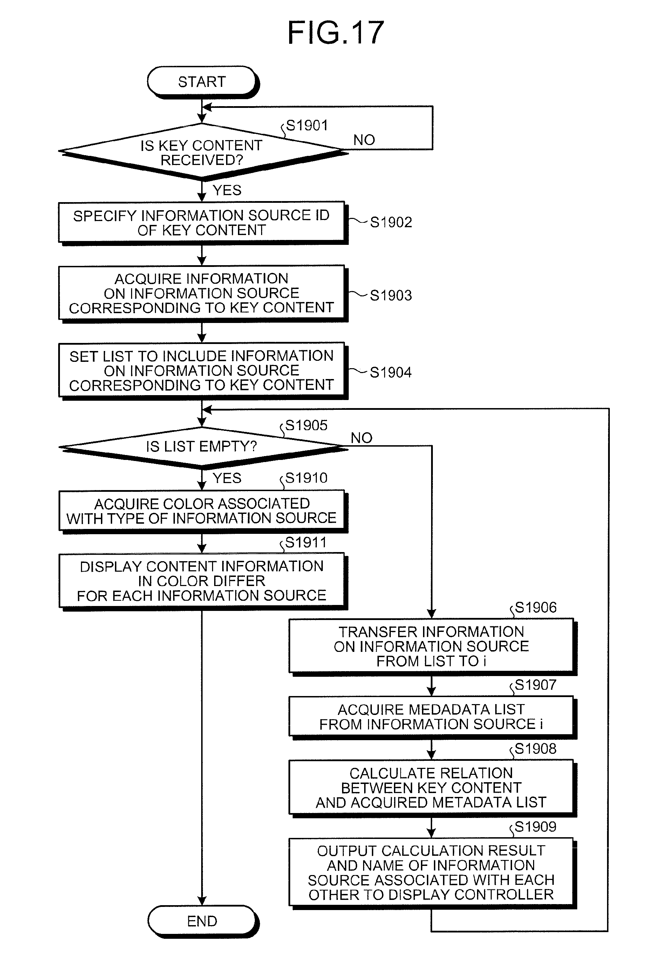

Displaying of the display information by the display processing apparatus 1700 having the above configuration is explained. FIG. 17 is a flow chart of display processing of display information by the display processing apparatus 1700 according to the third embodiment.

The remote controller operation receiver 101 waits until receipt of the search operation with a key content from an operation button of the remote controller 90 (S1901). Upon the receipt of a selection operation (Yes at S1901), the metadata retriever 102 specifies an information source ID of the key content based on information by which the key content input from the search key specifying module 110 is identified, and outputs the specified information source ID to the information source selector 1701 (S1902).

Thereafter, the information source selector 109 sets the "List" that stores destinations for acquiring the metadata so as to include the information source ID to be searched (S1904). Here, the information source ID to be searched contained in the "List" is associated with the information source ID of the input key content in the first association table 152. Accordingly, the information source to be searched is selected as the destination for acquiring the metadata by the key content. When the information source ID of the key content is not set, all of predetermined information sources are set in the variable "List".

The subsequent processing is substantially the same as S1305 to S1311 in FIG. 13 of the first embodiment, so that explanations thereof are omitted (S1905 to S1911). In this case, unlike the keyword search in S1308, the relation search in S1908 calculates the relation (distance) to the key content for each content. In S1911, the display controller 115 displays each content information on a search result screen positioned based on the calculated relation (distance).

In the display processing apparatus 100 according to this embodiment, in addition to the effect of the first embodiment, a desired content can easily and advantageously be specified by properly limiting the information source to be searched of the content so as to reduce the number of unnecessary contents to be displayed. Accordingly, the number of contents to be displayed can be properly decreased, and the time necessary until arrival at the necessary content by scroll or the like can be shortened. Further, convenience is improved by making a search, which is proper for a provider or a user, for each information source which provides contents.

The present invention is not limited to the above embodiments, and various modifications, which are exemplified below, are possible.

In the display processing apparatus 100 according to the first embodiment, the metadata acquiring module 103 acquires metadata for each information source. Alternatively, the metadata acquired from the information source can be previously stored, and a search can be performed on the stored metadata. It is explained in the following a display processing apparatus 1500 according to this modification, metadata of which are previously stored.

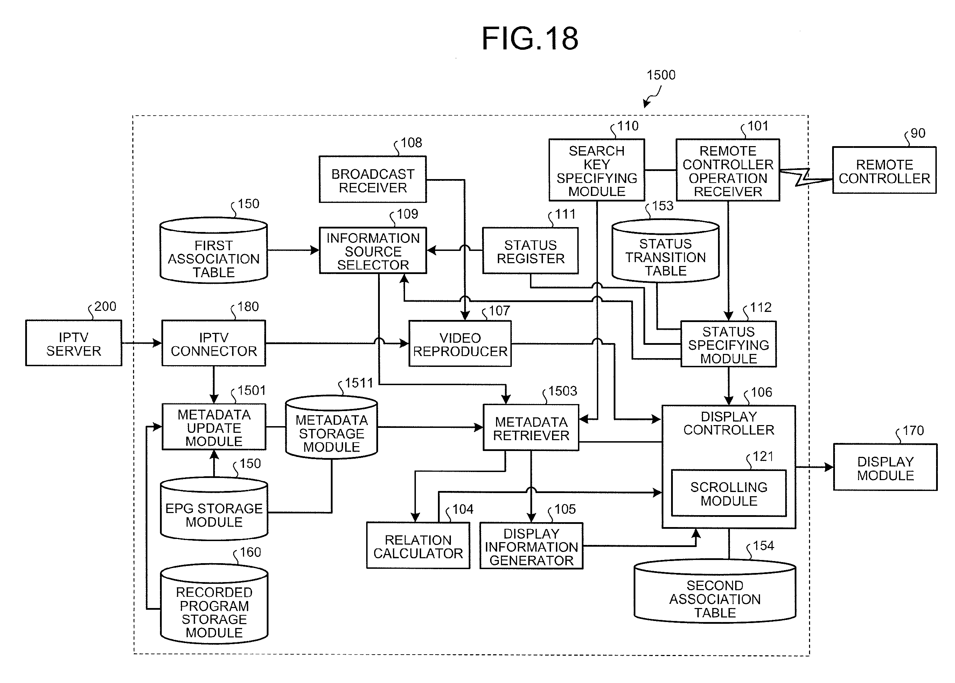

FIG. 18 is an exemplary block diagram of a display processing apparatus 1500 according to this modification. The display processing apparatus 1500 is different from the display processing apparatus 100 according to the first embodiment only in that the metadata acquiring table 151 and the metadata acquiring module 103 are deleted, a metadata update module 1501 and a metadata storage module 1511 are added, and a metadata search module 1503 differ from the metadata retriever 102 in processing. In the configuration of the display processing apparatus 1500 according to this modification, explanations of elements common to the display processing apparatus 100 according to the first embodiment are omitted.

The metadata storage module 1511 stores metadata acquired from each information source in association with an information source ID and a type of information source.

The metadata update module 1501 inputs metadata acquired from the IPTV connector 180, the EPG storage module 150, and the recorded program storage module 160 into the metadata storage module 1511.

The metadata search module 1503 detects metadata including a keyword specified by the search key specifying module 110 (satisfying search query) from the metadata stored in the metadata storage module 1511, and the metadata retriever 102 outputs the detected metadata to the display controller 106. The information source to be searched is an information source selected by the information source selector 109. Thus, the display controller 115 can display as a "List" content information that match with the search query based on a keyword.

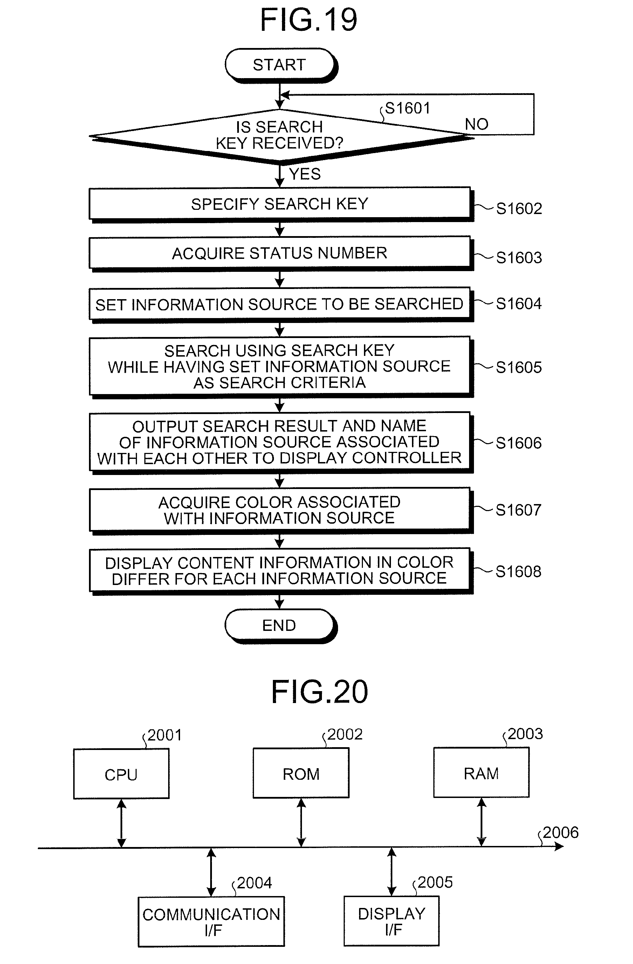

Next, display processing of the display information by the display processing apparatus 1500 having the above configurations will be explained. FIG. 19 is a flow chart of the display processing of the display information by the display processing apparatus 1500.

The remote controller operation receiver 101 waits until the receipt of the search operation by a search key from an operation button of the remote controller 90 (S1601). Upon receipt of the selection operation (Yes at S1601), the search key specifying module 110 specifies a keyword input by a user as a search keyword (S1602). Specifically, the search key specifying module 110 acquires the keyword, and the keyword is substituted for a variable "keyword".

The information source selector 109 acquires a status number indicating the last screen displayed before the search screen from the status register 111 (S1603).

Thereafter, the information source selector 109 sets a variable "List" so as to include an information source ID indicating an information source the metadata of which is to be searched (S1604). The information source ID is set in the same manner as in the second embodiment, that is, based on the first association table 152. The variable "List" is then output to the metadata search module 1503.

The metadata retriever 102 sets the information source ID, set by the input variable "List", as search query and then makes a search for the metadata storage module 1511 using the keyword recorded in the variable "keyword" (S1605). Thus, only the metadata of contents, which match with the search query by the selected information source and search key, are extracted.

Next, the metadata search module 1503 outputs metadata, including already associated information source type and information source ID), which match with the search query, to the display controller 106 (S1606).

Thereafter, the display controller 115 acquires colors associated with the types of information sources input together with the input metadata form the second association table 154 (S1607).

The display controller 115 displays list information using the metadata of the contents in different colors for each type of information source (S1608). Thus, in the display of search results, the list information shown in FIG. 9, in which the color varies for each type of information source, can be displayed.

The same configuration as this modification can also be applied to the second and third embodiments.

In this modification, the same effect as in the first embodiment can be attained, and the search speed can be improved by previously storing the metadata.

The display processing device according to the above embodiment includes a CPU 2001, a ROM (read only memory) 2002, a RAM 2003, a communication I/F 2004, a display I/F 2005 connected to the display module 170, and a bus 2006 connecting them and constitutes a hardware using a conventional computer.

The program executed by the display processing device according to this embodiment may be provided in such a form that it is recorded, in an installable or executable file, on recording media, which are readable by computers, for example, a compact disk read only memories (CD-ROM), a flexible disk (FD), a recordable compact disk (CD-R), and a digital versatile disk (DVD).

The display processing program executed by the display processing apparatus according to the embodiment may be provided in such a form that it is stored on a computer connected to a network such as the Internet and is downloaded through the network. Further, the display processing program executed by the display processing apparatus according to the embodiment may be provided or distributed through a network such as the Internet. The display processing program according to the embodiment may be previously incorporated, for example, in ROM 2002 before it is provided to users. The display processing program executed by the display processing apparatus according to the embodiment has module configurations including the aforementioned modules (for example, the remote controller operation receiving module, the metadata search module, the metadata acquiring module, the relation calculator, the display information generator, the display controller, the information source selector, the search key specifying module, and the status specifying module). In an actual hardware, CPU 2001 reads out the display processing program from the storage medium and executes the program, whereby the modules are loaded on the main storage device and, as a result, the remote controller operation receiver, the metadata search module, the metadata acquiring module, the relation calculator, the display information generator, the display controller, the information source selector, the search key specifying module, and the status specifying module are generated on RAM (main storage device) 2003, for example.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

**1.** A content display apparatus comprising:

a first storage module (151) configured to store a content provider and a category information in association with each other, the content provider providing a content, the category information representing a category grouping the content provider;

an acquiring module (103, 109; 103, 1701; 109, 1501, 1511) configured to acquire, for each content to be displayed, category information associated in the first storage module with content provider of the each content (151), the acquiring module (103, 109; 103, 1701; 109, 1501, 1511) acquiring the category information associated with the content provider of the each content in association with content information of the each content;

a second storage module (154) configured to store the category information and a display mode in association with each other, the display mode differentiating display of the content information for each category information; and

a display module (106, 170) configured to display the content information with the display mode.

2. The content display apparatus of Claim 1, further comprising:

a specifying module (110) configured to specify a search query for acquired content information; and
a retriever (102; 1503) configured to search through, using the specified search query, the acquired content information to retrieve content information matching with the search query, wherein
the display module (106, 170) displays the retrieved content information with the display mode.

3. The content display apparatus of Claim 2, further comprising:

a third storage module (152) configured to store screen information and the content provider of the content information to be searched, in association with each other; and
a screen information acquiring module (112) configured to acquire screen information of a screen displayed before the searching through the content information, wherein
the retriever (102; 1503) further searches through, using the specified search query, the content information provided by the content provider associated with the screen information in the third storage module, to retrieve content information matching with the search query.

4. The content display apparatus of Claim 3, wherein
the screen information associated in the third storage module (152) with the content provider represents a program guide, and
the content provider associated with the screen information in the third storage module (152) provides content displayed in the screen information.

5. The content display apparatus of Claim 2, further comprising:

a fourth storage module (1702) configured to store a content provider providing a content to be a search key and a content provider providing a content to be a search target in association with each other; and
a content provider acquiring module(110) configured to acquire the content provider providing the content to be the search key, wherein
the retriever (102; 1503) further acquires content information provided by the content provider providing the content to be the search target associated in the fourth storage module (1702) with the acquired content provider providing the content to be the search key.

6. A content display method implemented by a content display apparatus comprising a first storage module (151) and a second storage module (154), the first storage module (151) being configured to store a content provider and category information in association with each other, the content provider providing a content, the category information representing a category grouping the content provider, the second storage module being configured to store the category information and a display mode in association with each other, the display mode differentiating display of content information for each category information, the content display method comprising:

acquiring, by an acquiring module (103, 109; 103, 1701; 109, 1501, 1511), for each content to be displayed, category information associated with content provider of the each content in the first storage module, the acquiring acquiring the category information associated with the content provider of the each content in association with content information of the each content;
a displaying, by a display module (106, 170), the content information with the display mode.

7. The content display method of Claim 6, further comprising:

specifying, by a specifying module (110), a search query for acquired content information; and
searching through, by a retriever (102; 1503), using the specified search query, the acquired content information to retrieve content information matching with the search query, wherein
the displaying displays the retrieved content information with the display mode.

8. The content display method of Claim 7, wherein the content display apparatus further comprising a third storage module (152) configured to store screen information and the content provider of the content information to be searched in association with each other, and
the content display method further comprising acquiring screen information of a screen displayed before the searching through the content information, wherein
the searching further searches through, using the specified search query, the content information provided by the content provider associated with the screen information in the third storage module, to retrieve content information matching with the search query.

# FIG.1

EP 2 160 032 A2

# FIG.2

TITLE:        NOON COMEDY SHOW
CHANNEL:  CHANNEL 00
DATE:        AUG. 1, 2008 12:00-12:40
CAST:         XXXXX, YYYYY
SUBTITLE:  GREAT LINE UP OF COMEDIANS INVITE
                 YOU TO ENJOY NOON OF HILARIOUS
                 ENTERTAINMENT
GENRE:      COMEDY

# FIG.3A

C1

C1-1

C1-2 ── L358△*6

# FIG.3B

C1-3          C1

CHANNEL 00

NOON COMEDY SHOW

GREAT LINE UP OF
COMEDIANS INVITE YOU TO
C1-4 ── ENJOY NOON OF
HILARIOUS
ENTERTAINMENT

C1-5 ── 8/1 12:00-12:40

# FIG.4

| STATUS NUMBER | INPUT | PROCESSING | DESTINATION |
|---|---|---|---|
| 0 | PROGRAM GUIDE BUTTON | DISPLAY PROGRAM GUIDE | 1 |
| 1 | ENTER | DISPLAY STARTUP SCREEN FOR RETRIEVING | 2 |
| 1 | RIGHT BUTTON | MOVE CURSER | 1 |

# FIG.5

| LAST STATUS NUMBER | CURRENT STATUS NUMBER |
|---|---|
| 0 | 1 |

# FIG.6

| STATUS NUMBER | INFORMATION SOURCE |
|---|---|
| 1 | TERRESTRIAL DIGITAL EPG |
| 3 | IPTV SERVICE A |
| 4 | {TERRESTRIAL DIGITAL EPG, IPTV SERVICE A} |

# FIG.7

| INFORMATION SOURCE ID | ACQUIRING MODULE | OPTION | TYPE OF INFORMATION SOURCE |
|---|---|---|---|
| TERRESTRIAL DIGITAL EPG | EPG | Type=DDT | EPG |
| IPTV SERVICE A | IPTV CONNECTION | Service=A URL/USER ACCOUNT | IPTV |
| RECORDED FILE | RECORDED PROGRAM MANAGEMENT | (NONE) | FILE |
| IPTV SERVICE B | INTERNET CONNECTION | URL: http~ ,UserID~ | IPTV |
| RECORDED FILE | DLNA | SSID=~ | FILE |

# FIG.8

| INFORMATION SOURCE ID | COLOR |
|---|---|
| TERRESTRIAL DIGITAL EPG | WHITE |
| IPTV SERVICE A | BLUE |
| RECORDED FILE | YELLOW |
| IPTV SERVICE B | BLUE |

# FIG.9

LIST OF SEARCH RESULT

| | | |
|---|---|---|
| COMEDY SHOW "XX" | CHANNEL 00 | 2008/8/1 12:00-12:40 |
| DRAMA "YY" | CHANNEL 01 | 2008/7/10 20:00-20:54 |
| QUIZ SHOW "ZZ" | CHANNEL 01 | 2008/8/1 22:00-23:00 |
| MOVIE "QQ" | SERVICE AA | NO CHARGE 1H54m |
| MUSIC CLIP SHOW "RR" | SERVICE BB | ¥ 500 1H0m |

FIG.10

# FIG.11

EP 2 160 032 A2

# FIG.12

# FIG.13

START

S1301
IS SEARCH KEY RECEIVED? —— NO

↓ YES

SPECIFY SEARCH KEY — S1302

ACQUIRE STATUS NUMBER — S1303

SET LIST TO INCLUDE INFORMATION
ON ALL INFORMATION SOURCES — S1304

S1305
IS LIST EMPTY? —— NO

↓ YES   S1310

ACQUIRE COLOR ASSOCIATED
WITH TYPE OF INFORMATION SOURCE

S1311
DISPLAY CONTENT INFORMATION IN
COLOR DIFFER FOR EACH TYPE
OF INFORMATION SOURCE

S1306
TRANSFER INFORMATION ON
INFORMATION SOURCE FROM LIST TO i

S1307
ACQUIRE METADATA LIST
FROM INFORMATION SOURCE i

S1308
SEARCH ACQUIRED METADATA LIST
BY SPECIFIED SEARCH KEY

S1309
OUTPUT SEARCH RESULT
AND TYPE OF INFORMATION SOURCE
ASSOCIATED WITH EACH OTHER
TO DISPLAY CONTROLLER

END

# FIG.14

```
                    START

                        │◄──────────────────┐
                        ▼        S1401       │
            ◄────IS SEARCH KEY RECEIVED?────► NO
                        │
                        │ YES
                        ▼
            ┌──────────────────────────┐
            │    SPECIFY SEARCH KEY     │── S1402
            └──────────────────────────┘
                        │
                        ▼
            ┌──────────────────────────┐
            │   ACQUIRE STATUS NUMBER   │── S1403
            └──────────────────────────┘
                        │
                        ▼
            ┌──────────────────────────┐
            │ SET INFORMATION ON INFORMATION │── S1404
            │      SOURCE ASSOCIATED         │
            │  WITH ACQUIRED STATUS NUMBER   │
            └──────────────────────────┘
                        │◄─────────────────────────┐
                        ▼        S1405              │
            ◄──────IS LIST EMPTY?──────► NO         │
                        │                 │         │
                        │ YES  S1410      │         │
                        ▼                 │         │
            ┌──────────────────────────┐  │         │
            │  ACQUIRE COLOR ASSOCIATED │  │         │
            │   WITH INFORMATION SOURCE │  │         │
            └──────────────────────────┘  │         │
                        │        S1411     │         │
                        ▼                  │         │
            ┌──────────────────────────┐   │        │
            │ DISPLAY CONTENT INFORMATION│  │        │
            │      IN COLOR DIFFER       │  ▼        │
            │ FOR EACH INFORMATION SOURCE│           │
            └──────────────────────────┘            │
                        │          ┌──────────────────────────┐
                        │          │   TRANSFER INFORMATION ON    │── S1406
                        │          │ INFORMATION SOURCE FROM LIST TO i │
                        │          └──────────────────────────┘
                        │                     │
                        │                     ▼
                        │          ┌──────────────────────────┐
                        │          │    ACQUIRE METADATA LIST     │── S1407
                        │          │  FROM INFORMATION SOURCE i   │
                        │          └──────────────────────────┘
                        │                     │
                        │                     ▼
                        │          ┌──────────────────────────┐
                        │          │ SEARCH ACQUIRED METADATA LIST│── S1408
                        │          │   BY SPECIFIED SEARCH KEY    │
                        │          └──────────────────────────┘
                        │                     │
                        │                     ▼
                        │          ┌──────────────────────────┐
                        │          │    OUTPUT SEARCH RESULT      │── S1409
                        │          │ AND NAME OF INFORMATION SOURCE│
                        │          │  ASSOCIATED WITH EACH OTHER  │
                        │          │     TO DISPLAY CONTROLLER    │
                        │          └──────────────────────────┘
                        ▼                     │
                     END  ◄──────────────────┘
```

# FIG.15

EP 2 160 032 A2

# FIG.16

| SEARCH KEY | INFORMATION SOURCE TO BE SEARCHED |
|---|---|
| TERRESTRIAL DIGITAL EPG | TERRESTRIAL DIGITAL EPG |
| IPTV SERVICE A | IPTV SERVICE A |
| IPTV SERVICE B | {TERRESTRIAL DIGITAL EPG, IPTV SERVICE A, IPTV SERVICE B} |

# FIG.17

START

S1901
IS KEY CONTENT
RECEIVED?　　NO

YES

SPECIFY INFORMATION SOURCE ID
OF KEY CONTENT　　S1902

ACQUIRE INFORMATION
ON INFORMATION SOURCE
CORRESPONDING TO KEY CONTENT　　S1903

SET LIST TO INCLUDE INFORMATION
ON INFORMATION SOURCE
CORRESPONDING TO KEY CONTENT　　S1904

S1905
IS LIST EMPTY?　　NO

YES　　S1910

ACQUIRE COLOR ASSOCIATED
WITH TYPE OF INFORMATION SOURCE

S1911
DISPLAY CONTENT INFORMATION
IN COLOR DIFFER
FOR EACH INFORMATION SOURCE

S1906
TRANSFER INFORMATION
ON INFORMATION SOURCE
FROM LIST TO i

S1907
ACQUIRE MEDADATA LIST
FROM INFORMATION SOURCE i

S1908
CALCULATE RELATION
BETWEEN KEY CONTENT
AND ACQUIRED METADATA LIST

S1909
OUTPUT CALCULATION RESULT
AND NAME OF INFORMATION
SOURCE ASSOCIATED WITH EACH
OTHER TO DISPLAY CONTROLLER

END

# FIG.18

EP 2 160 032 A2

# FIG.19

```
                    ┌──────────┐
                    │  START   │
                    └──────────┘
                         │
                         ▼
              ╱─────────────────────╲      S1601
             ╱     IS SEARCH         ╲─────────── NO
             ╲   KEY RECEIVED?       ╱
              ╲─────────────────────╱
                         │ YES
                         ▼
       ┌─────────────────────────────────┐
       │       SPECIFY SEARCH KEY         │── S1602
       └─────────────────────────────────┘
                         │
                         ▼
       ┌─────────────────────────────────┐
       │      ACQUIRE STATUS NUMBER       │── S1603
       └─────────────────────────────────┘
                         │
                         ▼
       ┌─────────────────────────────────┐
       │ SET INFORMATION SOURCE TO BE     │── S1604
       │           SEARCHED               │
       └─────────────────────────────────┘
                         │
                         ▼
       ┌─────────────────────────────────┐
       │      SEARCH USING SEARCH KEY     │
       │ WHILE HAVING SET INFORMATION     │── S1605
       │   SOURCE AS SEARCH CRITERIA      │
       └─────────────────────────────────┘
                         │
                         ▼
       ┌─────────────────────────────────┐
       │  OUTPUT SEARCH RESULT AND NAME   │
       │ OF INFORMATION SOURCE ASSOCIATED │── S1606
       │ WITH EACH OTHER TO DISPLAY       │
       │           CONTROLLER             │
       └─────────────────────────────────┘
                         │
                         ▼
       ┌─────────────────────────────────┐
       │   ACQUIRE COLOR ASSOCIATED       │── S1607
       │    WITH INFORMATION SOURCE       │
       └─────────────────────────────────┘
                         │
                         ▼
       ┌─────────────────────────────────┐
       │ DISPLAY CONTENT INFORMATION IN   │── S1608
       │ COLOR DIFFER FOR EACH            │
       │      INFORMATION SOURCE          │
       └─────────────────────────────────┘
                         │
                         ▼
                    ┌──────────┐
                    │   END    │
                    └──────────┘
```

# FIG.20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001292383 A